# EUROPÄISCHE PATENTSCHRIFT

(11) **EP 3 388 809 B1**
(45) Veröffentlichungstag und Bekanntmachung des Hinweises auf die Patenterteilung: **07.10.2020**
(21) Anmeldenummer: 17165899.0
(22) Anmeldetag: 11.04.2017
(51) Int. Cl.: G01M 1/22

(54) **VERFAHREN UND ANORDNUNG ZUM DETEKTIEREN EINER UNWUCHT EINES ROTIERENDEN MASCHINENELEMENTS**
METHOD AND SYSTEM FOR DETECTING AN IMBALANCE OF A ROTATING MACHINE ELEMENT
PROCÉDÉ ET AGENCEMENT DE DÉTECTION D'UN BALOURD D'UN ÉLÉMENT DE MACHINE TOURNANTE

(43) Veröffentlichungstag der Anmeldung: 17.10.2018
(73) Patentinhaber: Siemens Aktiengesellschaft, 80333 München (DE)
(72) Erfinder: Ludwig, Christoph Ernst, 81735 München (DE); Tsouchnika, Efrossini, 81371 München (DE); Wever, Utz, 81539 München (DE); Jungiewicz, Artur, 13086 Berlin (DE); Hübner, Lutz, 14165 Berlin (DE); Brandstaedter, Heide, 12435 Berlin (DE)

(56) Entgegenhaltungen:
- EP-A1- 2 280 264
- US-A- 3 034 330
- US-A1- 2008 282 799

## Beschreibung

Bei Maschinen mit rotierenden Elementen, wie z.B. Turbinen, Generatoren, großen Elektromotoren oder Kraftfahrzeugen kann eine Unwucht eines rotierenden Elements zu einem geringeren Wirkungsgrad und insbesondere bei hohen Rotationsgeschwindigkeiten zu vorzeitigem Verschleiß und zu Beschädigungen führen. Darüber hinaus ist eine im Betrieb auftretende Unwucht oft ein Anzeichen für eine Beschädigung der Maschine, wie z.B. bei einem Abbruch einer Turbinenschaufel.

Um Beschädigungen frühzeitig zu erkennen und/oder zu vermeiden, werden Maschinen mit rotierenden Elementen häufig mit Sensoren zum Detektieren von Unwuchten versehen. 1 US 2008/282799 A1 beschreibt ein Verfahren zur Bestimmung einer Unwucht in einem Fahrzeugreifen, wobei der Fahrzeugreifen auf eine Welle aufgebracht wird und diese rotiert, wobei durch Erfassung von Sensordaten der rotierenden Welle und aus den verarbeiteten Sensordaten dann auf die Unwucht geschlossen wird.

US 3 034 330 A beschreibt eine verbesserte Kalibrierung einer Vorrichtung zur Messung von Unwuchten, wobei eine genau bekannte Kraft, beziehungsweise, eine genau bekannte Unwucht auf den rotierenden Gegenstand einwirken und damit anhand der erfassten Sensordaten bestimmt werden kann, welche einwirkende Kraft zu welchen Sensordaten führt.

EP 2 280 264 A1 beschreibt ein Verfahren, bei dem überprüft wird, ob sich Unwuchten reproduzierbar wiederholen, um fortlaufend eine Kalibrierung der Unwuchtsmessung durchführen zu können. Unwuchten, die durch mechanische Veränderungen oder Beschädigungen verursacht werden, erzeugen in den Sensordaten in der Regel ein charakteristisches Frequenzspektrum, das bisher durch Experten manuell zu analysieren ist. Eine solche manuelle Analyse ist jedoch verhältnismäßig aufwendig.

Es ist Aufgabe der vorliegenden Erfindung, ein Verfahren und eine Anordnung zum Detektieren einer Unwucht eines rotierenden Maschinenelements zu schaffen, die eine weniger aufwendige quantifizierte Detektion der Unwucht erlauben.

Gelöst wird diese Aufgabe durch ein Verfahren mit den Merkmalen des Patentanspruchs 1, durch eine Anordnung mit den Merkmalen des Patentanspruchs 10, durch ein Computerprogrammprodukt mit den Merkmalen des Patentanspruchs 11 und durch ein computerlesbares Speichermedium mit den Merkmalen des Patentanspruchs 12.

Zum Detektieren einer Unwucht eines um eine Rotationsachse rotierenden Maschinenelements werden am rotierenden Maschinenelement gemessene Sensordaten fortlaufend erfasst und einer parallel zum Betrieb des Maschinenelements ausgeführten, dynamischen Simulation des rotierenden Maschinenelements zugeführt. Ein solches rotierendes Maschinenelement kann insbesondere ein Rotor eines Generators, einer Windturbine oder einer Gasturbine oder eine Radachse oder Antriebswelle sein. Durch die Simulation wird anhand der zugeführten Sensordaten ein dynamischer Zustand des rotierenden Maschinenelements ermittelt, wobei eine variierbare dynamische Einwirkung auf das rotierende Maschinenelement simuliert wird. Anhand des ermittelten dynamischen Zustands werden simulierte Sensordaten ermittelt. Die dynamische Einwirkung wird derart variiert, dass ein Abstand zwischen den simulierten Sensordaten und den erfassten Sensordaten verringert wird. Weiterhin wird aus einer aus der Variation resultierenden dynamischen Einwirkung ein Betrag der Unwucht abgeleitet und ausgegeben.

Zum Ausführen des erfindungsgemäßen Verfahrens gemäß Anspruch 1 sind eine Anordnung gemäß Anspruch 10 zum Detektieren einer Unwucht eines um eine Rotationsachse rotierenden Maschinenelements, ein Computerprogrammprodukt gemäß Anspruch 11 sowie ein computerlesbares Speichermedium gemäß Anspruch 12 vorgesehen. Das erfindungsgemäße Verfahren und die erfindungsgemäße Anordnung können beispielsweise mittels einem oder mehrerer Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Ein wesentlicher Vorteil der Erfindung ist darin zu sehen, dass insbesondere eine fehlerbedingte Unwucht am rotierenden Maschinenelement automatisch detektiert und quantifiziert werden kann. Auf diese Weise kann eine Fehlersuche in der Regel erheblich verkürzt werden. Durch die Simulation der dynamischen Einwirkung kann eine Unwucht auf einfache Weise verhältnismäßig präzise modelliert werden.

Durch die quantifizierte Detektion einer Unwucht kann die Erfindung in vorteilhafter Weise dazu genutzt werden, mechanisehe Fehler frühzeitig zu erkennen und/oder abzuschätzen, ob oder wie lange ein rotierendes Maschinenelement noch betrieben werden kann. Auf diese Weise können fehlerbedingte Ausfallzeiten in vielen Fällen verringert werden.

Vorteilhafte Ausführungsformen und Weiterbildungen der Erfindung sind in den abhängigen Ansprüchen angegeben.

Gemäß einer vorteilhaften Ausführungsform der Erfindung kann als dynamische Einwirkung eine auf das rotierende Maschinenelement einwirkende Kraft simuliert werden. Durch eine solche Kraftsimulation können viele mechanische Fehler, beispielsweise ein Abbruch von Teilen des rotierenden Maschinenelements hinsichtlich der resultierenden Dynamik verhältnismäßig genau und mit geringem Aufwand modelliert werden.

Weiterhin kann als dynamische Einwirkung eine entlang der Rotationsachse ortsabhängige, d.h. ortsaufgelöste Einwirkung vorgesehen sein. Die Variation der dynamischen Einwirkung kann dann ortsabhängig erfolgen, und aus der resultierenden dynamischen Einwirkung kann eine Position der Unwucht abgeleitet und ausgegeben werden. Bei der ortsaufgelösten Einwirkung kann eine Vielzahl von Positionen, z.B. ca. 25 Positionen entlang der Rotationsachse unterschieden werden. Dementsprechend kann die Position einer Unwucht mit entsprechender Ortsauflösung ermittelt werden.

Ferner kann als dynamische Einwirkung eine hinsichtlich der Rotationsachse winkelabhängige, d.h. winkelaufgelöste Einwirkung vorgesehen sein. Die Variation der dynamischen Einwirkung kann dann winkelabhängig erfolgen, und aus der resultierenden dynamischen Einwirkung kann eine Orientierung der Unwucht abgeleitet und ausgegeben werden. Die dynamische Einwirkung kann insbesondere winkelabhängig hinsichtlich eines Drehwinkels um die Rotationsachse und/oder hinsichtlich eines körperfesten Zylinderkoordinatensystems des Maschinenelements sein. Als Orientierung kann ein Winkel der Unwucht bezüglich des körperfesten Zylinderkoordinatensystems ausgegeben werden.

Darüber hinaus kann als dynamische Einwirkung eine hinsichtlich eines Abstandes von der Rotationsachse abstandsabhängige, d.h. abstandsaufgelöste Einwirkung vorgesehen sein. Die Variation der dynamischen Einwirkung kann dann abstandsabhängig erfolgen, und aus der resultierenden dynamischen Einwirkung kann eine Position der Unwucht abgeleitet und ausgegeben werden.

Durch die vorstehenden Ausgestaltungen kann eine detektierte Unwucht im laufenden Betrieb lokalisiert werden, und zwar hinsichtlich ihrer Position entlang der Rotationachse, ihrer Orientierung bezüglich des Maschinenelements und/oder hinsichtlich ihres Abstandes von der Rotationsachse. Durch eine derartige Lokalisierung kann eine unwuchtbedingte Fehlersuche in der Regel erheblich verkürzt werden.

Vorzugsweise kann die Simulation mittels eines dynamischen Simulationsmodells ausgeführt werden, das eine schwingungstechnische Auslenkung des rotierenden Maschinenelements abbildet.

Weiterhin kann aus einem numerischen Strukturmodell des Maschinenelements ein reduziertes, dynamisches Simulationsmodell abgeleitet werden. Die Simulation kann dann mittels des abgeleiteten dynamischen Simulationsmodells ausgeführt werden. Derartige Strukturmodelle von Maschinenelementen sind in vielen Fällen in hochaufgelöster Form verfügbar. Dynamische Simulationen anhand solcher hochaufgelöster Strukturmodelle, z.B. mittels eines Finite-Elemente-Verfahrens sind jedoch aufgrund des erheblichen Rechenaufwands häufig nicht echtzeitfähig. Durch die Reduktion eines Strukturmodells auf wenige für eine Modellierung einer Unwucht relevante Einflussgrößen kann ein Simulationsaufwand in der Regel erheblich verringert werden.

Vorzugsweise kann ein dynamischer Einfluss eines Lagers des Maschinenelements als nichtlinearer Einfluss simuliert werden. Ein Lager eines rotierenden Maschinenelements hat in der Regel einen erheblichen Einfluss auf ein Schwingungsverhalten des Maschinenelements. Es erweist sich, dass dieser Einfluss einen hohen nichtlinearen Anteil aufweist. Durch eine nichtlineare Modellierung und Simulation des dynamischen Einflusses des Lagers kann eine Simulationsgenauigkeit oft erheblich gesteigert werden.

Weiterhin können die Sensordaten durch einen Beschleunigungssensor, Geschwindigkeitsensor und/oder Abstandssensor gemessen werden.

Insbesondere können die Sensordaten durch einen an einem Lager des Maschinenelements angeordneten Sensor gemessen werden.

Nach einer vorteilhaften Ausführungsform der Erfindung können aus den erfassten Sensordaten und/oder ermittelten Sensordaten Frequenzspektren abgeleitet werden. Der Abstand kann dann anhand der abgeleiteten Frequenzspektren und/oder einer Amplitude der Sensordaten ermittelt werden. Anhand der Frequenzspektren kann eine fehlerbedingte Frequenzverschiebung von Schwingungen des rotierenden Maschinenelements besser erkannt und ausgewertet werden.

Darüber hinaus kann die Simulation fortlaufend anhand der erfassten Sensordaten kalibriert werden. Auf diese Weise kann die Simulation im laufenden Betrieb an aktuelle Betriebsbedingungen angepasst werden.

Ein Ausführungsbeispiel der Erfindung wird nachfolgend anhand der Zeichnung näher erläutert. Dabei zeigen jeweils in schematischer Darstellung:
Figur 1 ein rotierendes Maschinenelement und
Figur 2 eine erfindungsgemäße Anordnung zum Detektieren einer Unwucht des rotierenden Maschinenelements.

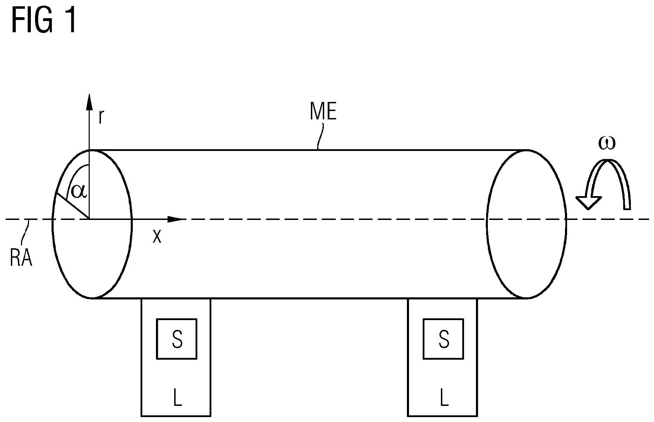

Figur 1 veranschaulicht ein um eine Rotationsachse RA rotierendes Maschinenelement ME. Das Maschinenelement ME kann z.B. ein Rotor einer Windturbine, Gasturbine oder einer anderen Turbine, eine Radachse oder eine Antriebswelle sein. Es sei für das vorliegende Ausführungsbeispiel angenommen, dass das Maschinenelement ME mit einer Winkelgeschwindigkeit ω um die in Figur 1 durch eine strichlierte Linie angedeutete Rotationsachse RA rotiert. Eine Position bezüglich des Maschinenelements ME wird im vorliegenden Ausführungsbeispiel mittels eines körperfesten Zylinderkoordinatensystems des Maschinenelements ME spezifiziert. Dabei seien x, r und α Koordinaten im Zylinderkoordinatensystem des Maschinenelements ME bezüglich der Rotationsachse RA. x spezifiziert hierbei die Koordinate entlang der Rotationsachse RA, r die Koordinate in radialer Richtung zur Rotationsachse RA, d.h. den Abstand von der Rotationsachse RA sowie α die Winkelkoordinate in Drehrichtung des Maschinenelements ME.

Das rotierende Maschinenelement ME ist auf mehreren Lagern L gelagert. An den Lagern L sind jeweils ein oder mehrere Beschleunigungssensoren S angeordnet, um von dem rotierenden Maschinenelement ME auf die Lager L übertragene Vibrationen oder andere Beschleunigungen zu messen. Alternativ oder zusätzlich können ein oder mehrere Geschwindigkeitssensoren und/oder Abstandssensoren vorgesehen sein.

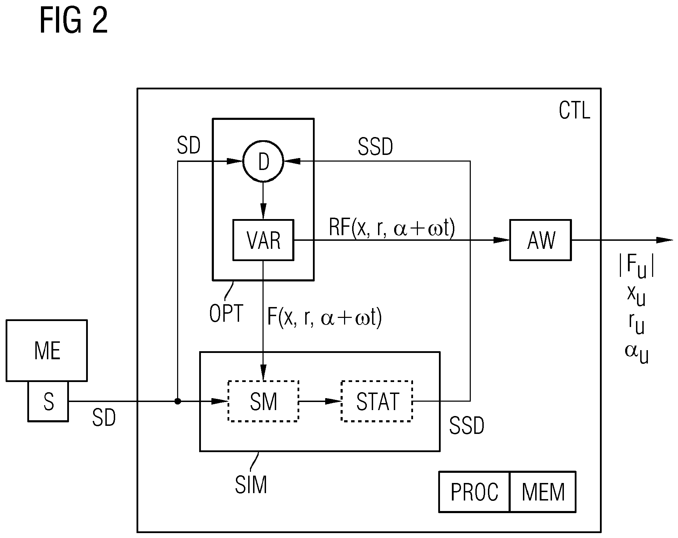

Figur 2 zeigt eine erfindungsgemäße Anordnung zum Detektieren einer Unwucht des in Figur 1 veranschaulichten rotierenden Maschinenelements ME in schematischer Darstellung. Die erfindungsgemäße Anordnung umfasst eine Steuereinrichtung CTL, z.B. eine Turbinensteuerung, mit einer erfindungsgemäßen Unwuchtdetektion. Die Steuereinrichtung CTL verfügt über einen oder mehrere Prozessoren PROC zum Ausführen der Verfahrensschritte der Erfindung sowie über einen oder mehrere mit dem Prozessor PROC gekoppelte Speicher MEM zum Speichern der von der Steuereinrichtung CTL zu verarbeitenden Daten.

Am rotierenden Maschinenelement ME werden durch Sensoren S, die wie oben beschrieben ausgestaltet sein können, Sensordaten SD in einem vorgegeben Zeittakt fortlaufend gemessen und durch die Steuereinrichtung CTL erfasst. Die Steuereinrichtung CTL führt eine dynamische Simulation SIM des rotierenden Maschinenelements ME parallel zum Betrieb des Maschinenelements ME in Echtzeit aus. Der Simulation SIM werden hierfür die erfassten Sensordaten SD zugeführt.

Die Simulation SIM wird anhand eines dynamischen Simulationsmodells SM des rotierenden Maschinenelements ME ausgeführt. Das Simulationsmodell SM modelliert eine schwingungstechnische Auslenkung des rotierenden Maschinenelements ME und reproduziert diese in der Simulation SIM.

Das Simulationsmodell SM wird vorzugsweise durch Reduktion aus einem numerischen Strukturmodell des Maschinenelements ME abgeleitet. Derartige Strukturmodelle sind für viele Maschinen, z.B. aus ihrer Entwurfs- oder Designphase in hoher Auflösung verfügbar. Solche Strukturmodelle eignen sich zwar häufig für Finite-Elemente-Simulationen, doch sind diese aufgrund des hohen Rechenbedarfs in der Regel nicht echtzeitfähig.

Zur Nutzung in einer echtzeitfähigen Simulation, hier SIM, kann ein Strukturmodell häufig auf wenige für eine Modellierung einer Unwucht relevante Einflussgrößen reduziert werden. Bei einer solchen Reduktion sollte allerdings ein Schwingungsverhalten des rotierenden Maschinenelements ME erhalten bleiben. In diesem Sinne wird im vorliegenden Ausführungsbeispiel ein Einfluss einer Unwucht als am rotierenden Maschinenelement ME angreifende Kraft F im Simulationsmodell SM modelliert. Die Unwucht wird damit im Simulationsmodell SM auf eine einfache dynamische Einwirkung reduziert, die sich in der Regel in Echtzeit berechnen lässt.

Die am rotierenden Maschinenelement ME angreifende Kraft F wird im vorliegenden Ausführungsbeispiel als variierbare ortsabhängige, winkelabhängige und abstandsabhängige, dynamische Einwirkung dargestellt durch eine Funktion F(x,r,α+ω·t) mit x, r, α, ω, wie im Zusammenhang mit Figur 1 beschrieben. t bezeichnet hierbei eine Zeitkoordinate. Die Kraft F wirkt dabei in radialer Richtung, d.h. in Richtung einer durch Unwucht verursachten Fliehkraft. Auf diese Weise kann ein dynamischer Einfluss einer Unwucht gut modelliert und simuliert werden. Insbesondere können viele Funktionsfehler des rotierenden Maschinenelements ME, z.B. ein Abbruch von Teilen, auf einfache Weise verhältnismäßig genau modelliert werden.

Ein dynamischer Einfluss der Lager auf das rotierende Maschinenelement ME wird im Simulationsmodell SM vorzugsweise als nichtlinearer Einfluss simuliert.

Im Allgemeinen kann das Simulationsmodell SM durch ein System von Differentialgleichungen DGL dargestellt werden, das die schwingungstechnische Auslenkung des rotierenden Maschinenelements ME modelliert, z.B. gemäß DGL(d(x,r,α,t,ω)) = F(x,r,α+ω·t), mit DGL als Differentialoperator und d als ortsabhängige, abstandsabhängige und winkelabhängige Schwingungsauslenkung. Ein solches Differentialgleichungssystem kann mit numerischem Standardverfahren in der Regel in Echtzeit gelöst werden. Gegebenenfalls kann zu diesem Zweck eine Ordnung des Simulationsmodells SM weiter reduziert werden.

Der Simulation SIM bzw. dem Simulationsmodell SM werden die erfassten Sensordaten SD sowie eine Funktion F(x,r,α+ω·t) der Krafteinwirkung in geeigneter Parametrisierung zugeführt. Durch die Simulation SIM wird daraus ein dynamischer Zustand STAT des rotierenden Maschinenelements ME in Echtzeit ermittelt, der sich simulationsgemäß bei dieser Krafteinwirkung aktuell einstellen würde. Der dynamische Zustand STAT beschreibt insbesondere eine schwingungstechnische Auslenkung des rotierenden Maschinenelements ME.

Anhand des ermittelten dynamischen Zustands STAT wird weiterhin berechnet, welche Beschleunigungen oder andere Einwirkungen an den Sensoren S bei Vorliegen dieses dynamischen Zustands STAT simulationsgemäß auftreten würden. Hieraus werden simulierte Sensordaten SSD ermittelt, die diesen Einwirkungen simulationsgemäß entsprechen würden.

Die erfassten Sensordaten SD sowie die simulierten Sensordaten SSD werden zu einem Optimierungsmodul OPT der Steuereinrichtung CTL übermittelt. Das Optimierungsmodul OPT ermittelt einen Abstand D zwischen den erfassten Sensordaten SD und den simulierten Sensordaten SSD und dient dem Zweck, diesen Abstand D durch geeignete Variation der Krafteinwirkung F(x,r,α+ω·t) zu minimieren.

Zum Ermitteln des Abstands D werden aus den erfassten Sensordaten SD und den simulierten Sensordaten SSD Frequenzspektren abgeleitet, z.B. durch eine Fast-Fourier-Transformation. Der Abstand D wird dann durch Vergleich der resultierenden Frequenzspektren mittels eines geeigneten, z.B. euklidischen Abstandsmaßes und ggf. anhand von Amplituden der ermittelten und simulierten Sensordaten SD und SSD ermittelt.

Der Abstand D wird einem Variationsmodul VAR des Optimierungsmoduls OPT zugeführt. Das Variationsmodul VAR generiert abhängig von den zugeführten Abständen D Variationen der Krafteinwirkung F als ortsabhängige, winkelabhängige und abstandsabhängige Funktionen F(x,r,α+ω·t) und übermittelt diese zur Simulation SIM. Die Simulation SIM simuliert, wie oben beschrieben, den Einfluss dieser variierten Krafteinwirkungen und ermittelt entsprechend einen zugehörigen dynamischen Zustand STAT und zugehörige simulierte Sensordaten SSD. Aus diesen simulierten Sensordaten SSD wird durch das Optimierungsmodul OPT wiederum ein Abstand D zu den erfassten Sensordaten SD berechnet. Die Funktionen F(x,r,α+ω·t) werden dann durch das Variationsmodul VAR derart generiert, dass der Abstand D minimiert wird. Hierfür können effiziente Standard-Minimierungsverfahren, z.B. Gradientenabstiegsmethoden verwendet werden. Auf diese Weise kann ermittelt werden, durch welche Krafteinwirkung F die erfassten Sensordaten SD am besten reproduziert werden, d.h. welche Krafteinwirkung F gewissermaßen am besten zu den erfassten Sensordaten SD passt. Eine derartige Bestimmung einer Größe, hier F, wird häufig auch als Identifikation oder Fitting dieser Größe bezeichnet.

Diejenige Krafteinwirkung, die den Abstand D minimiert, wird vom Variationsmodul VAR als resultierende ortsabhängige, winkelabhängige und abstandsabhängige Krafteinwirkung RF(x,r,α+ω·t) ausgegeben und zu einer Auswerteeinrichtung AW der Steuereinrichtung CTL übermittelt. Aufgrund der Einfachheit der zugrundeliegenden Simulationsmodells SM kann die Ermittlung der den Abstand D minimierenden resultierenden Krafteinwirkung RF anhand der erfassten Sensordaten SD in Echtzeit erfolgen. D.h. die Krafteinwirkung RF kann auf diese Weise fortlaufend mit den erfassten Sensordaten SD abgeglichen werden. Vorzugsweise kann darüber hinaus die Simulation SIM anhand der erfassten Sensordaten SD fortlaufend kalibriert werden.

Durch die Auswerteeinrichtung AW wird die resultierende Krafteinwirkung RF ausgewertet. Dabei wird aus der resultierenden Krafteinwirkung RF(x,r,α+ω·t) ein Betrag |Fᵤ| der Unwucht, eine Position xᵤ der Unwucht entlang der Rotationsachse RA, ein Abstand rᵤ der Unwucht von der Rotationsachse RA und ein Winkel αᵤ der Unwucht auf dem Maschinenelement ME ermittelt. Der Betrag |Fᵤ| der Unwucht kann z.B. als Maximalwert oder Mittelwert der resultierenden Krafteinwirkung RF ermittelt werden. Korrespondierend dazu können xᵤ, rᵤ und αᵤ z.B. als Maximalstellen der resultierenden Krafteinwirkung RF ermittelt werden. Die den Betrag |Fᵤ|, die Position xᵤ, den Abstand rᵤ sowie den Winkel αᵤ der Unwucht spezifizierenden Größen werden schließlich durch die Auswerteeinrichtung AW ausgegeben.

Die vorstehend beschriebene Erfindung erlaubt eine effiziente quantifizierte Detektion von Unwuchten. Ein wesentlicher Vorteil ist insbesondere darin zu sehen, dass eine festgestellte Unwucht automatisch im laufenden Betrieb verhältnismäßig genau am rotierenden Maschinenelement ME durch xᵤ, rᵤ und αᵤ lokalisiert werden kann. Durch eine solche Lokalisierung einer Unwucht kann eine Fehlersuche in der Regel erheblich verkürzt werden.

Damit kann die Erfindung vorteilhaft zum Überwachen, Testen, Einstellen und Steuern von Maschinen mit rotierenden Elementen sowie zu deren Inbetriebnahme, Fehlererkennung, Wartung, Diagnose, Inspektion und Optimierung im laufenden Betrieb eingesetzt werden.

## Patentansprüche

1. Verfahren zum Detektieren einer Unwucht eines um eine Rotationsachse (RA) rotierenden Maschinenelements (ME), wobei
a) am rotierenden Maschinenelement (ME) gemessene Sensordaten (SD) fortlaufend erfasst werden, **dadurch gekennzeichnet, dass**
b) die erfassten Sensordaten (SD) einer parallel zum Betrieb des Maschinenelements (ME) ausgeführten, Echtzeit Simulation (SIM) des rotierenden Maschinenelements (ME) zugeführt werden,
c) durch die Simulation (SIM) anhand der zugeführten Sensordaten (SD) ein dynamischer Zustand (STAT) des rotierenden Maschinenelements (ME) ermittelt wird, wobei eine variierbare dynamische Einwirkung (F) auf das rotierende Maschinenelement (ME) simuliert wird, wobei die Simulation (SIM) mittels eines Simulationsmodells (SM) ausgeführt wird, das eine schwingungstechnische Auslenkung des rotierenden Maschinenelements (ME) abbildet, wobei aus einem numerischen Strukturmodell des Maschinenelements (ME) ein reduziertes Simulationsmodell (SM) abgeleitet wird, bei dem ein Einfluss einer Unwucht als am rotierenden Maschinenelement (ME) angreifende Kraft modelliert wird, und wobei die Simulation (SIM) mittels des abgeleiteten reduzierten Simulationsmodells (SM) ausgeführt wird,
d) anhand des ermittelten dynamischen Zustands (STAT) simulierte Sensordaten (SSD) ermittelt werden,
e) die auf das rotierende Maschinenelement (ME) einwirkende Kraft derart variiert wird, dass ein Abstand (D) zwischen den simulierten Sensordaten (SSD) und den erfassten Sensordaten (SD) verringert wird, und
f) aus einer aus der Variation resultierenden dynamischen Einwirkung (RF) ein Betrag (|Fᵤ|) der Unwucht abgeleitet und ausgegeben wird.

2. Verfahren nach Anspruch 1, **dadurch gekennzeichnet,**
**dass** die dynamische Einwirkung (F) eine entlang der Rotationsachse (RA) ortsabhängige Einwirkung ist,
**dass** die Variation der dynamischen Einwirkung (F) ortsabhängig erfolgt, und
**dass** aus der resultierenden dynamischen Einwirkung (RF) eine Position (xᵤ) der Unwucht abgeleitet und ausgegeben wird.

3. Verfahren nach einem der vorhergehenden Ansprüche, **dadurch gekennzeichnet,**
**dass** die dynamische Einwirkung (F) eine hinsichtlich der Rotationsachse (RA) winkelabhängige Einwirkung ist,
**dass** die Variation der dynamischen Einwirkung (F) winkelabhängig erfolgt, und
**dass** aus der resultierenden dynamischen Einwirkung (RF) eine Orientierung (αᵤ) der Unwucht abgeleitet und ausgegeben wird.

4. Verfahren nach einem der vorhergehenden Ansprüche, **dadurch gekennzeichnet,**
**dass** die dynamische Einwirkung (F) eine hinsichtlich eines Abstandes (r) von der Rotationsachse (RA) abstandsabhängige Einwirkung ist,
**dass** die Variation der dynamischen Einwirkung (F) abstandsabhängig erfolgt, und
**dass** aus der resultierenden dynamischen Einwirkung (RF) eine Position (rᵤ) der Unwucht abgeleitet und ausgegeben wird.

5. Verfahren nach einem der vorhergehenden Ansprüche, **dadurch gekennzeichnet,**
**dass** ein dynamischer Einfluss eines Lagers (L) des Maschinenelements (ME) als nichtlinearer Einfluss simuliert wird.

6. Verfahren nach einem der vorhergehenden Ansprüche, **dadurch gekennzeichnet, dass**
die Sensordaten (SD) durch einen Beschleunigungssensor (S), Geschwindigkeitsensor und/oder Abstandssensor gemessen werden.

7. Verfahren nach einem der vorhergehenden Ansprüche, **dadurch gekennzeichnet, dass**
die Sensordaten (SD) durch einen an einem Lager (L) des Maschinenelements (ME) angeordneten Sensor (S) gemessen werden.

8. Verfahren nach einem der vorhergehenden Ansprüche, **dadurch gekennzeichnet,**
**dass** aus den erfassten Sensordaten (SD) und/oder ermittelten Sensordaten (SSD) Frequenzspektren abgeleitet werden, und dass der Abstand anhand der Frequenzspektren und/oder einer Amplitude der Sensordaten (SD, SSD) ermittelt wird.

9. Verfahren nach einem der vorhergehenden Ansprüche, **dadurch gekennzeichnet,**
**dass** die Simulation (SIM) fortlaufend anhand der erfassten Sensordaten (SD) kalibriert wird.

10. Anordnung zum Detektieren einer Unwucht eines um eine Rotationsachse (RA) rotierenden Maschinenelements (ME) umfassend eine Steuereinrichtung (CTL), welche durch Sensoren (S) am rotierenden Maschinenelement (ME) in einem vorgegebenen Zeittakt fortlaufend gemessene Sensordaten (SD) erfasst, und einen oder mehrere Prozessoren (PROC),
eingerichtet zum Ausführen eines Verfahrens nach einem der vorhergehenden Ansprüche.

11. Computerprogrammprodukt eingerichtet zum Ausführen auf einem Prozessor in einer Anordnung gemäß Anspruch 10.

12. Computerlesbares Speichermedium mit einem Computerprogrammprodukt nach Anspruch 11.

## Claims

1. Method for detecting an imbalance of a machine element (ME) rotating about an axis of rotation (RA), wherein
a) sensor data (SD) measured at the rotating machine element (ME) are continuously captured, **characterized in that**
b) the captured sensor data (SD) are supplied to a real-time simulation (SIM) of the rotating machine element (ME) which is carried out in parallel with the operation of the machine element (ME),
c) a dynamic state (STAT) of the rotating machine element (ME) is determined by the simulation (SIM) on the basis of the supplied sensor data (SD), wherein a variable dynamic effect (F) on the rotating machine element (ME) is simulated, wherein the simulation (SIM) is carried out by means of a simulation model (SM) which represents a vibrational deflection of the rotating machine element (ME), wherein a reduced simulation model (SM) is derived from a numerical structural model of the machine element (ME), in which simulation model an influence of an imbalance is modelled as a force acting on the rotating machine element (ME), and wherein the simulation (SIM) is carried out by means of the derived reduced simulation model (SM),
d) simulated sensor data (SSD) are determined on the basis of the determined dynamic state (STAT),
e) the force acting on the rotating machine element (ME) is varied in such a manner that a distance (D) between the simulated sensor data (SSD) and the captured sensor data (SD) is reduced, and
f) an absolute value (|Fᵤ|) of the imbalance is derived from a dynamic effect (RF) resulting from the variation and is output.

2. Method according to Claim 1, **characterized**
**in that** the dynamic effect (F) is a location-dependent effect along the axis of rotation (RA),
**in that** the dynamic effect (F) is varied in a location-dependent manner, and
**in that** a position (xᵤ) of the imbalance is derived from the resulting dynamic effect (RF) and is output.

3. Method according to one of the preceding claims,
**characterized**
**in that** the dynamic effect (F) is an angle-dependent effect with respect to the axis of rotation (RA),
**in that** the dynamic effect (F) is varied in an angle-dependent manner, and
**in that** an orientation (αᵤ) of the imbalance is derived from the resulting dynamic effect (RF) and is output.

4. Method according to one of the preceding claims,
**characterized**
**in that** the dynamic effect (F) is a distance-dependent effect with respect to a distance (r) from the axis of rotation (RA), in that the dynamic effect (F) is varied in a distance-dependent manner, and
**in that** a position (rᵤ) of the imbalance is derived from the resulting dynamic effect (RF) and is output.

5. Method according to one of the preceding claims,
**characterized**
**in that** a dynamic influence of a bearing (L) of the machine element (ME) is simulated as a non-linear influence.

6. Method according to one of the preceding claims,
**characterized in that**
the sensor data (SD) are measured by an acceleration sensor (S), a speed sensor and/or a distance sensor.

7. Method according to one of the preceding claims,
**characterized in that**
the sensor data (SD) are measured by a sensor (S) arranged on a bearing (L) of the machine element (ME).

8. Method according to one of the preceding claims,
**characterized**
**in that** frequency spectra are derived from the captured sensor data (SD) and/or determined sensor data (SSD), and
**in that** the distance is determined on the basis of the frequency spectra and/or an amplitude of the sensor data (SD, SSD) .

9. Method according to one of the preceding claims,
**characterized**
**in that** the simulation (SIM) is continuously calibrated on the basis of the captured sensor data (SD).

10. Arrangement for detecting an imbalance of a machine element (ME) rotating about an axis of rotation (RA), comprising a control device (CTL) which captures sensor data (SD) continuously measured by sensors (S) on the rotating machine element (ME) in a predefined time cycle, and one or more processors (PROC), configured to carry out a method according to one of the preceding claims.

11. Computer program product configured to be executed on a processor in an arrangement according to Claim 10.

12. Computer-readable storage medium having a computer program product according to Claim 11.

## Revendications

1. Procédé pour la détection d'un balourd d'un élément de machine (ME) tournant autour d'un axe de rotation (RA), dans lequel
a) des données de capteur (SD) mesurées au niveau de l'élément de machine (ME) tournant sont enregistrées en continu, **caractérisées en ce que**
b) les données de capteur (SD) enregistrées sont appliquées à une simulation (SIM) en temps réel de l'élément de machine (ME) tournant exécutée parallèlement au fonctionnement de l'élément de machine (ME),
c) un état dynamique (STAT) de l'élément de machine (ME) tournant est déterminé grâce à la simulation (SIM) à l'aide des données de capteur (SD) appliquées, dans lequel une action dynamique (F) variable sur l'élément de machine (ME) tournant est simulée, dans lequel la simulation (SIM) est exécutée au moyen d'un modèle de simulation (SM) qui représente une déviation oscillatoire de l'élément de machine (ME) tournant, dans lequel un modèle de simulation (SM) réduit est dérivé d'un modèle structural numérique de l'élément de machine (ME), pour lequel une influence d'un balourd est modélisée sous la forme d'une force se portant sur l'élément de machine (ME) tournant, et dans lequel la simulation (SIM) est exécutée au moyen du modèle de simulation (SM) réduit dérivé,
d) des données de capteur simulées (SSD) sont déterminées à l'aide de l'état dynamique (STAT) déterminé,
e) la force agissant sur l'élément de machine (ME) tournant est amenée à varier de telle sorte qu'un écart (D) entre les données de capteur simulées (SSD) et les données de capteur (SD) enregistrées soit amoindri, et
f) une valeur absolue (|Fᵤ|) du balourd est dérivée et émise à partir d'une action dynamique résultant de la variation (RF).

2. Procédé selon la revendication 1, **caractérisé**
**en ce que** l'action dynamique (F) est une action dépendante de l'emplacement le long de l'axe de rotation (RA),
**en ce que** la variation de l'action dynamique (F) s'effectue de manière dépendante de l'emplacement, et
**en ce qu'**une position (xᵤ) du balourd est dérivée et émise à partir de l'action dynamique résultante (RF).

3. Procédé selon l'une des revendications précédentes,
**caractérisé**
**en ce que** l'action dynamique (F) est une action dépendante de l'angle vis-à-vis de l'axe de rotation (RA),
**en ce que** la variation de l'action dynamique (F) s'effectue de manière dépendante de l'angle, et
**en ce qu'**une orientation (αᵤ) du balourd est dérivée et émise à partir de l'action dynamique résultante (RF).

4. Procédé selon l'une des revendications précédentes,
**caractérisé**
**en ce que** l'action dynamique (F) est une action dépendante de la distance vis-à-vis d'une distance (r) de l'axe de rotation (RA),
**en ce que** la variation de l'action dynamique (F) s'effectue de manière dépendante de la distance, et
**en ce qu'**une position (rᵤ) du balourd est dérivée et émise à partir de l'action dynamique résultante (RF).

5. Procédé selon l'une des revendications précédentes,
**caractérisé**
**en ce qu'**une influence dynamique d'un palier (L) de l'élément de machine (ME) est simulée sous la forme d'une influence non linéaire.

6. Procédé selon l'une des revendications précédentes,
**caractérisé**
**en ce que** les données de capteur (SD) sont mesurées grâce à un capteur d'accélération (S), un capteur de vitesse et/ou un capteur de distance.

7. Procédé selon l'une des revendications précédentes,
**caractérisé**
**en ce que** les données de capteur (SD) sont mesurées grâce à un capteur (S) disposé au niveau d'un palier (L) de l'élément de machine (ME).

8. Procédé selon l'une des revendications précédentes,
**caractérisé**
**en ce que** des spectres de fréquence sont dérivés des données de capteur (SD) enregistrées et/ou des données de capteur (SSD) déterminées, et
**en ce que** la distance est déterminée à l'aide des spectres de fréquence et/ou d'une amplitude des données de capteur (SD, SSD).

9. Procédé selon l'une des revendications précédentes,
**caractérisé**
**en ce que** la simulation (SIM) est étalonnée en continu à l'aide des données de capteur (SD) enregistrées.

10. Agencement pour la détection d'un balourd d'un élément de machine (ME) tournant autour d'un axe de rotation (RA), comportant un dispositif de commande (CTL), lequel enregistre des données de capteur (SD) mesurées en continu, à une cadence prédéfinie, grâce à des capteurs (S) au niveau de l'élément de machine (ME) tournant, et un ou plusieurs processeurs (PROC), conçu pour l'exécution d'un procédé selon l'une des revendications précédentes.

11. Produit de programme informatique conçu pour une exécution sur un processeur dans un agencement selon la revendication 10.

12. Support de stockage lisible par ordinateur avec un produit de programme informatique selon la revendication 11.
